# EUROPEAN PATENT SPECIFICATION

(11) **EP 4 276 817 B1**
(45) Date of publication and mention of the grant of the patent: **23.09.2026**
(21) Application number: 21917605.4
(22) Date of filing: 03.12.2021
(51) Int. Cl.: G10L 17/06

(54) **IDENTIFICATION DEVICE, IDENTIFICATION METHOD, AND PROGRAM**
IDENTIFIKATIONSVORRICHTUNG, IDENTIFIKATIONSVERFAHREN UND PROGRAMM
DISPOSITIF ET PROCÉDÉ D'IDENTIFICATION, AINSI QUE PROGRAMME

(30) Priority: 05.01.2021 JP 2021000606
(43) Date of publication of application: 15.11.2023
(73) Proprietor: Panasonic Intellectual Property Corporation of America, Torrance, CA 90504 (US)
(72) Inventor: DOI, Misaki, Kadoma-shi, Osaka 571-0057 (JP)
(74) Representative: Novagraaf International SA
(86) International application number: PCT/JP2021/044509
(87) International publication number: WO 2022/149384

(56) References cited:
- WO-A1-2014/112375
- WO-A1-2020/003413
- WO-A1-2020/003413
- JP-A- 2007 128 046
- JP-A- 2020 060 757
- US-A1- 2004 107 099
- US-A1- 2016 019 896
- US-A1- 2019 027 152
- US-B2- 7 788 101
- JORGEN HARMSE ET AL: "Speaker Recognition Score-Normalization to Compensate for SNR and Duration", SPEAKER AND LANGUAGE RECOGNITION WORKSHOP, 2006. IEEE ODYSSEY 2006: TH E, IEEE, PI, 1 June 2006 (2006-06-01), pages 1 - 8, XP031017933, ISBN: 978-1-4244-0471-1

## Description

### [Technical Field]

The present invention relates to an identification device, an identification method, and a program.

### [Background Art]

There is a technique of identifying the speaker of input voice data based on the degree of similarity between the input voice data and registered voice data (see e.g., Patent Literature (PTL) 1).

There is another technique of calculating a correction factor based on scatter graph/density function graph of recognition scores in the context of identifying a speaker (see Patent Literature (PTL) 2).

### [Citation List]

### [Patent Literature]

[PTL 1] Japanese Unexamined Patent Application Publication No. 2015-55835
[PTL 2] US 7 788 101 B2

### [Summary of Invention]

### [Technical Problem]

Depending on the content of the voice data, however, the performance of identifying the voice data may degrade. With a degradation in the identification performance of identifying the voice data, the accuracy in identifying the speaker decreases.

To address the problem, the present invention provides an identification device that identifies a speaker more accurately.

### [Solution to Problem]

The invention is as defined in the appended independent claims. Preferred embodiments are set forth in the dependent claims.

Note that the general and specific aspect of the present invention may be implemented using a system, a method, an integrated circuit, a computer program, or a computer-readable recording medium such as a CD-ROM, or any combination of systems, methods, integrated circuits, computer programs, or recording media.

### [Advantageous Effects of Invention]

The identification device according to the present invention identifies a speaker more accurately.

### [Brief Description of Drawings]

[FIG. 1]

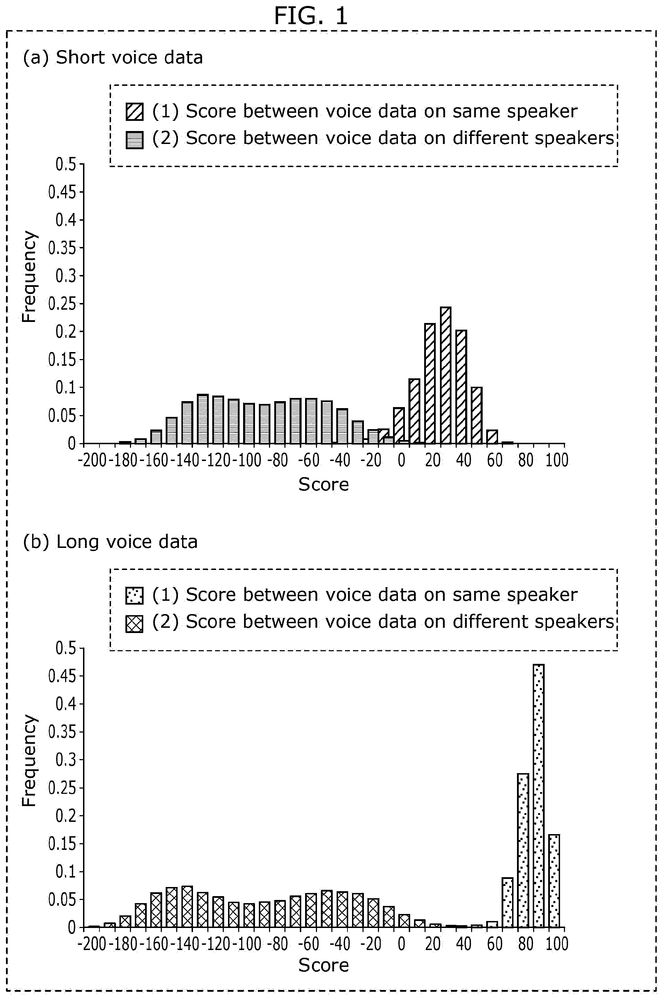

   FIG. 1 illustrates an example method of identifying a speaker based on a score.
[FIG. 2]

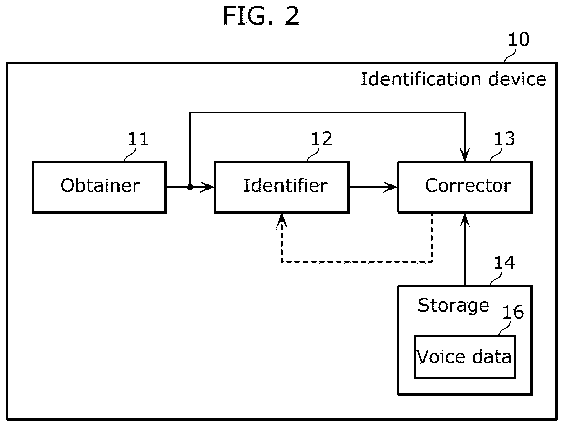

   FIG. 2 is a block diagram showing a functional configuration of an identification device according to an embodiment.
[FIG. 3]

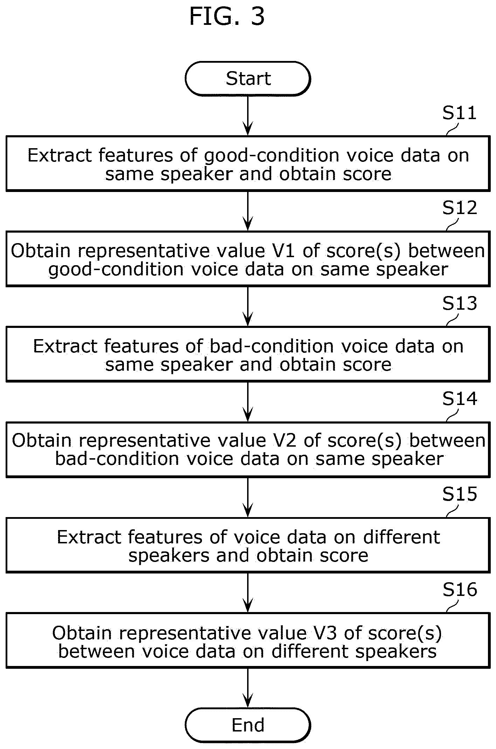

   FIG. 3 is a flowchart showing the processing of obtaining representative values, for example, by a corrector according to the embodiment.
[FIG. 4]

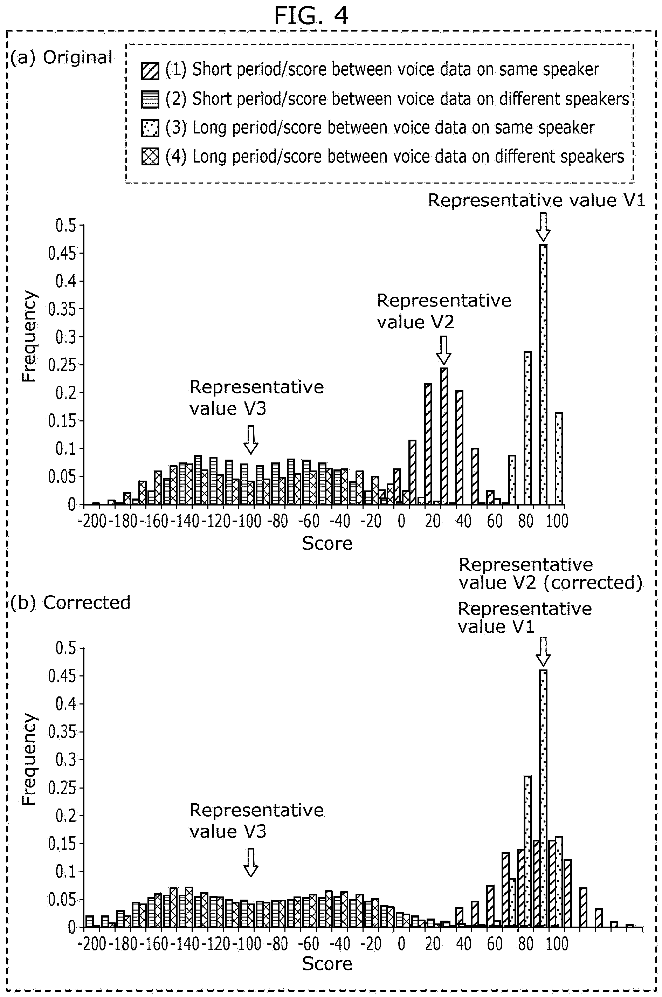

   FIG. 4 illustrates correction of scores by the corrector according to the embodiment.
[FIG. 5]

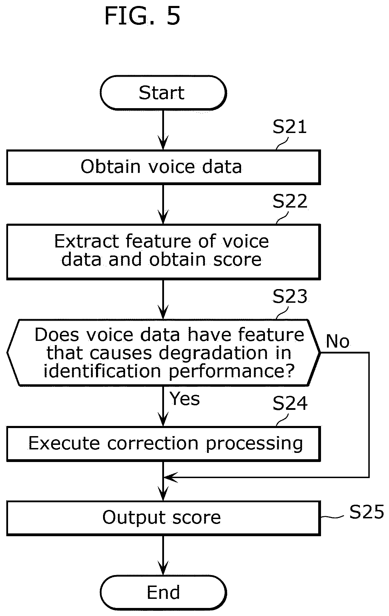

   FIG. 5 is a flowchart showing identification processing executed by the identification device according to the embodiment.
[FIG. 6]

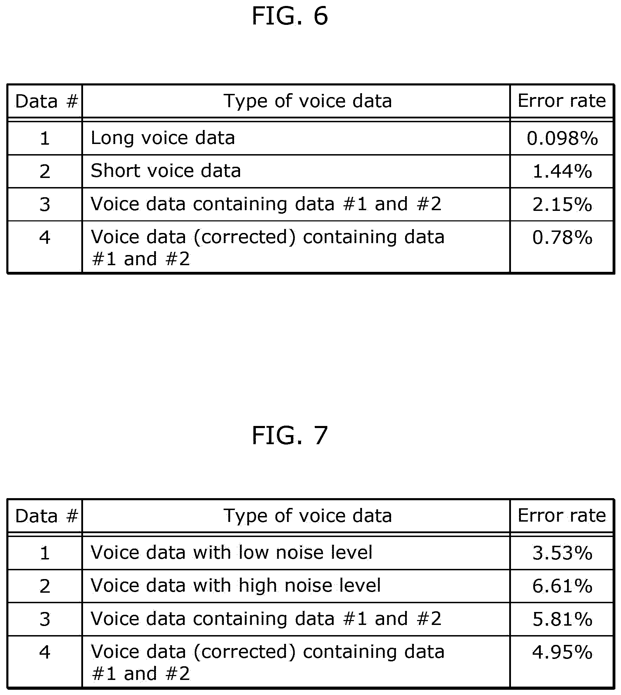

   FIG. 6 illustrates a first result of evaluating the identification performance of the identification device according to the embodiment.
[FIG. 7]
   FIG. 7 illustrates a second result of evaluating the identification performance of the identification device according to the embodiment.

### [Description of Embodiment]

### (Underlying Knowledge Forming Basis of the Present Invention)

The present invention found the following problems in the technique of identifying a speaker described in the "Background Art".

A typical technique of identifying the speaker of voice data is based on a score indicating the degree of similarity between registered voice data and input voice data. The registered voice data is related to the utterance of a certain speaker, while the input voice data is related to the utterance of an unknown speaker.

The score obtained in the technique described above is relatively high, when the speaker of the input voice data is identical to the speaker of the registered voice data. On the other hand, the score is low, when the speakers are different. Determination of a suitable threshold is expected to determine the magnitude of the output score. If the score is higher than the threshold, the speaker of the input voice data is determined to be identical to the speaker of the registered voice data. If not, the speaker of the input voice data is determined to be different from the speaker of the registered voice data. In this manner, the speaker of the input voice data is identified.

FIG. 1 illustrates an example method of identifying a speaker based on a score.

FIG. 1 shows a histogram of scores in speaker identification processing. The horizontal axis represents the scores in the speaker identification processing, while the vertical axis represents the frequencies of the scores.

The histogram shown in (a) of FIG. 1 shows the scores indicating the degrees of similarity between two voice data extracted from a plurality of voice data in various patterns. The plurality of voice data contain short voices, in other words, the lengths of the voices are relatively short, for example, shorter than about ten seconds. The plurality of voice data include the voice data on the utterances of a plurality of speakers, more specifically, a plurality of voice data on the respective utterances of the plurality of speakers. In (a) of FIG. 1, histogram (1) shows the scores where the speakers of two extracted voice data are the same, while histogram (2) shows the scores where the speakers of two extracted voice data are different.

While the histogram shown in (b) of FIG. 1 is similar to that in (a) of FIG. 1, the plurality of voice data contain different lengths of voices. Specifically, the plurality of voice data used to induce the histogram shown in (b) of FIG. 1 contain long voices, in other words, the lengths of the voices are relatively long, for example, longer than or equal to about ten seconds.

The scores are assumed to be used to grasp how large or small the degrees of similarity are or to compare the degrees. The numbers of the scores themselves have no particular significance.

As shown in (a) of FIG. 1, speaker identification processing on relatively short voice data leads to the following result. The scores indicating the degrees of similarity between voice data on different speakers are lower than about -10. On the other hand, the scores indicating the degrees of similarity between voice data on the same speaker are higher than or equal to about -10.

In the result of the speaker identification processing on relatively short voice data, -10 or a closer value can be used as a threshold. In the speaker identification processing, the pair or group of the voice data with a score(s) higher than or equal to the threshold is determined to be a pair or group of "voice data on the same speaker". On the other hand, the pair or group of the voice data with a score(s) lower than the threshold is determined to be a pair or group of "voice data on different speakers".

On the other hand, as shown in (b) of FIG. 1, the speaker identification processing on relatively long voice data leads to the following result. The scores indicating the degrees of similarity between voice data on different speakers are lower than about 50. On the other hand, the scores indicating the degrees of similarity between voice data on the same speaker are higher than or equal to about 50.

In the result of the speaker identification processing on relatively long voice data, 50 or a closer value can be used as a threshold.

It is however difficult to determine one suitable threshold for the speaker identification processing on voice data that is a mixture of relatively short and long voice data.

Specifically, assume that -10 or a closer value is used as a threshold for speaker identification processing on the mixture of relatively short and long voice data shown in (a) and (b) of FIG. 1. In this case, the speaker identification processing on the relatively short voice data is performed suitably and accurately, while the speaker identification processing on the relatively long voice data is performed unsuitably, in other words, less accurately. On the other hand, assume that 50 or a closer value is used as a threshold for identifying the speaker of the mixture. In this case, the speaker identification processing on the relatively long voice data is performed suitably and accurately, while the speaker identification processing on the relatively short voice data is performed unsuitably, in other words, less accurately. Assume that a value other than the values described above is used as a threshold for the mixture of the voice data. In this case, while the speaker identification processing on the relatively short and long voice data is performed unsuitably, in other words, less accurately.

In this manner, depending on the content of the voice data, the performance of the speaker identification processing on voice data may degrade.

Now, an embodiment will be described in detail with reference to the drawings.

The embodiment described below is a general and specific example. The numerical values, shapes, materials, constituent elements, the arrangement and connection of the constituent elements, steps, step orders etc. shown in the following embodiment are thus mere examples, and are not intended to limit the scope of the present invention. Among the constituent elements illustrated in the following embodiment, constituent elements that are not recited in the independent claims which embody the broadest concept of the present invention will be described as optional constituent elements.

### [Embodiment]

In this embodiment, an identification device will be described, for example, which identifies a speaker more accurately.

FIG. 2 is a block diagram showing a functional configuration of identification device 10 according to this embodiment.

As shown in FIG. 2, identification device 10 includes obtainer 11, identifier 12, corrector 13, and storage 14. The functional parts described above of identification device 10 are achieved by a processor (e.g., central processing unit (CPU)) of identification device 10 executing a predetermined program using a memory or by a storage device.

Obtainer 11 is a functional part that obtains voice data. The voice data obtained by obtainer 11 is subjected to speaker identification by identification device 10. Obtainer 11 may obtain voice data through communications from an external device of identification device 10. Being a microphone, which collects voice arrived at identification device 10 and generates voice data, obtainer 11 may generate and obtain voice data.

Identifier 12 is a functional part that executes the speaker identification processing. Identifier 12 obtains a score indicating the degree of similarity between the voice data obtained by obtainer 11 and voice data on an utterance of a predetermined speaker by executing the speaker identification processing. The speaker identification processing is achieved by a known technique, for example, x-vectors.

Corrector 13 is a functional part that performs the correction processing on the score obtained by identifier 12. Corrector 13 determines whether the voice data obtained by obtainer 11 has a feature that causes a degradation in the identification performance of the speaker identification processing by identifier 12. When determining that the voice data obtained by obtainer 11 has the feature, corrector 13 corrects the score as follows and outputs the corrected score. Corrector 13 corrects the score to reduce the influence of the degradation in the identification performance on the score obtained by identifier 12. On the other hand, when determining that the voice data obtained by obtainer 11 does not have the feature, corrector 13 outputs the score obtained by identifier 12 without performing the correction processing described above.

In the correction processing, corrector 13 performs, as an example, the following processing on the score obtained by identifier 12. Corrector 13 makes the distribution of the scores obtained by identifier 12 for two voice data on the same speaker with the feature described above approximate to the distribution of the scores obtained by identifier 12 for two voice data on the same speaker without the feature described above.

More specifically, in the correction processing, corrector 13 performs scaling processing on (generally called "scale-conversion processing") the score obtained by identifier 12 based on first, second, and third representative values of three types of scores obtained in advance. The scaling processing is to scale-convert the range of the scores obtained by identifier 12 from the third representative value to the second representative value, and from the third representative value to the first representative value. To be scaled is the entire range of the scores obtained by identifier 12, and not limited to the range from the third representative value to the second representative value, for example.

Here, the first representative value represents the scores obtained by identifier 12 in advance for two or more voice data (also referred to as "first voice data") on the same speaker without the feature described above. The second representative value represents the scores obtained by identifier 12 in advance for two or more voice data (also referred to as "second voice data") on the same speaker with the feature described above. The third representative value represents the scores obtained by identifier 12 for two or more voice data (also referred to as "third voice data") on different speakers as obtained in advance. Note that the two or more first, second, or third voice data are included in voice data 16 stored in storage 14 and can be obtained by reading out voice data 16.

The first representative value is obtained through statistical processing of one or more scores obtained by identifier 12 for the two or more first voice data described above. Specifically, the representative value is the mean, the median, or the mode. The second representative value is obtained through statistical processing of one or more scores obtained by identifier 12 for the two or more second voice data described above. Specifically, the representative value is the mean, the median, or the mode. The third representative value is obtained through statistical processing of one or more scores obtained by identifier 12 for the two or more third voice data described above. Specifically, the representative value is the mean, the median, or the mode.

The scaling processing described above is expressed by following Equation (1). Specifically, S2 that is the score after being corrected by corrector 13 is expressed by following Equation (1), where S1 is the score obtained by identifier 12, V1 is the first representative value, V2 is the second representative value, and V3 is the third representative value.$S 2 = \left(S1-V3\right) \times \left(V1-V3\right) / \left(V2-V3\right) + V 3$

The feature that causes a degradation in the identification performance of the speaker identification processing by identifier 12 includes, for example, the following. One feature is that the voice in the voice data obtained by obtainer 11 is shorter than a threshold. Another feature is that the level of noise contained in the voice in the voice data described above is higher than or equal to a threshold. Further another feature is that the reverberation period of the voice in the voice data described above is longer than or equal to a threshold. Now, an example will be described where the feature described above is that the voice in the voice data is shorter than a threshold. The threshold in the form of the length of the voice in the voice data is, for example, ten seconds, but not limited thereto. The threshold may be within a range from about 1 second to about 20 seconds. The threshold in the form of the noise level is, for example, an SN ratio (i.e., signal-to-noise ratio) of 12 dB, but not limited thereto. The threshold may be within a range from about 20 dB to about 0 dB. The threshold in the form of the reverberation period is, for example 500 milliseconds, but not limited thereto. The threshold may be within a range from about 300 milliseconds to about 800 milliseconds.

Storage 14 is a storage device that stores voice data 16 for use in the correction processing by corrector 13. Voice data 16 stored in storage 14 includes the two or more first, second, and third voice data described above. Storage 14 may be a volatile storage device, such as a read-only memory (RAM), or a non-volatile storage device, such as a hard disk drive (HDD) or a solid-state drive (SSD).

FIG. 3 is a flowchart showing the processing of obtaining representative values by corrector 13 according to this embodiment.

Here, voice data with the feature that causes a degradation in the identification performance of the speaker identification processing by identifier 12 will be referred to as "bad-condition voice data", while voice data without the feature will be referred to as "good-condition voice data".

In step S11, corrector 13 extracts the features of two or more good-condition voice data on the same speaker and obtains a score(s) indicating the degree(s) of similarity between the two or more voice data based on the extracted features. If there are two voice data, corrector 13 obtains one score indicating the degrees of similarity. More generally, if there are N voice data, corrector 13 obtains _{N}C₂ scores indicating the degrees of similarity through brute force combinations of the voice data. Not all combinations are however necessary and, in this case, a number smaller than _{N}C₂ of scores may be obtained.

In step S12, corrector 13 obtains representative value V1 of the score(s) obtained in step S11 for two or more good-condition voice data on the same speaker. If one score is obtained in step S11, the one score is obtained as representative value V1. If a plurality of scores are obtained in step S11, the plurality of scores are subjected to statistical processing to obtain representative value V1.

In step S13, corrector 13 extracts the features of two bad-condition voice data on the same speaker and obtains a score(s) indicating the degree of similarity between the two voice data described above based on the extracted features. The number of the score(s) to be obtained is the same as described in step S11.

In step S14, corrector 13 obtains representative value V2 of the score obtained in step S13 for two bad-condition voice data on the same speaker. Representative value V2 of the score(s) obtained in step S13 can be obtained in the same manner as in step S12.

In step S15, corrector 13 extracts the features of two voice data on different speakers and obtains the score(s) indicating the degree of similarity between the two voice data based on the extracted features. The number of the score(s) to be obtained is the same as described in step S11.

In step S16, corrector 13 obtains representative value V3 of the score(s) obtained in step S15 for two voice data on different speakers. Representative value V3 of the score(s) obtained in step S15 can be obtained in the same manner as in step S12.

S11 and S12 needs to be executed in this order but may be executed after other steps S13 to S16. Similarly, steps S13 and S14 needs to be executed in this order but may be executed before or after other steps S11, S12, S15, and S16. Steps S15 and S16 needs to be executed in this order but may be executed before other steps S11 to S14.

FIG. 4 illustrates correction of scores by corrector 13 according to this embodiment.

In FIG. 4, (a) shows following scores (1) to (4) obtained by identifier 12 (i.e., before being corrected by corrector 13).
(1) Score indicating degree of similarity between two or more voice data containing short voices of same speaker (corresponding to (1) in (a) of FIG. 1)
(2) Score indicating degree of similarity between two or more voice data containing short voices of different speakers (corresponding to (2) in (a) of FIG. 1)
(3) Score indicating degree of similarity between two or more voice data containing long voices of same speaker (corresponding to (1) in (b) of FIG. 1)
(4) Score indicating degree of similarity between two or more voice data containing long voices of different speakers (corresponding to (2) in (b) of FIG. 1)

In FIG. 4, (a) shows representative values V1, V2, and V3. Representative value V1 is calculated by corrector 13 based on voice data (3) described above. Representative value V2 is calculated by corrector 13 based on voice data (1) described above. Representative value V3 is calculated by corrector 13 based on voice data (2) and (4) described above.

In FIG. 4, (b) shows the scores to be output by corrector 13 and indicating the degree of similarity among voice data (1) to (4) described above.

Here, scores (1) and (2) shown in (b) of FIG. 4 are obtained by corrector 13 through the correction processing on the scores obtained by identifier 12. Through the correction processing (specifically, scaling processing), the range from representative value V3 to representative value V2 is scale-converted to the range from representative value V3 to representative value V1. Note that scores (3) and (4) shown in (b) of FIG. 4 are the scores obtained by identifier 12.

Representative value V3 is unchanged before and after the correction processing by corrector 13. After the correction processing by corrector 13, representative value V2 becomes equal to representative value V1.

The corrected scores are as follows in the both the cases where the voice data contain short voices and where the voice data contain long voices. The scores indicating the degrees of similarity between voice data on different speakers are lower than about 50. The scores indicating the degrees of similarity between voice data on the same speaker are higher than or equal to about 50. That is, with the use of 50 or a closer value as a threshold, whether the voice data are associated with the same speaker or different speakers can be determined in the both the cases where the voice data contain short voices and where the voice data contain long voices. The same applies to the case where the voice data contain a mixture of short and long voices.

A threshold (corresponding to 50 described above) is used to determine whether the score indicates the degree of similarity between voice data on the same speaker or on different speakers. The threshold may be calculated by arithmetic processing based on the score distribution or on human determination.

The processing (also referred to as an "identification method") executed by identification device 10 with the configuration described above will be described.

FIG. 5 is a flowchart showing the identification processing executed by identification device 10 according to this embodiment.

In step S21, obtainer 11 obtains voice data.

In step S22, identifier 12 extracts the feature of the voice data obtained in step S21 and obtains a score.

In step S23, corrector 13 determines whether the voice data obtained in step S21 has the feature that causes a degradation in the identification performance. If the voice data has the feature ("Yes" in step S23), the process proceeds to step S24. If not ("No" in step S23), the process proceeds to step S25.

In step S24, corrector 13 executes the correction processing on the score obtained in step S22.

In step S25, corrector 13 outputs a score. Corrector 13 outputs the corrected score, if the voice data obtained in step S21 is determined to have the feature that causes a degradation in the identification performance (Yes in step S23). On the other hand, corrector 13 outputs the original score, that is, the score obtained in step S22, if the data does is determined not to have the feature (No in step S23).

Through the series of processing shown in FIG. 5, identification device 10 identifies a speaker more accurately.

Now, an example result of evaluating the performance of identification device 10 will be described.

FIG. 6 illustrates a first result of evaluating the identification performance of identification device 10 according to this embodiment.

FIG. 6 shows the rate of erroneous determinations as to whether the voice data are associated with the same speaker or different speakers, with respective suitable thresholds set for four voice data (i.e., data #1 to #4).

Data #1 is voice data containing a long voice, for example, a voice longer than or equal to about ten seconds.

Data #2 is voice data containing a short voice, for example, a voice shorter than ten seconds.

Data #3 is voice data that is a mixture of data #1 and #2.

Data #4 is voice data that is a mixture of data #1 and #2. The score for short voice data included in the voice data described above is subjected to the correction processing by corrector 13.

In FIG. 6, the error rate of data #3 is shown as 2.15%. That is, without any correction processing by corrector 13, errors occur at 2.15% in the determination as to whether the voice data are associated with the same speaker or different speakers.

On the other hand, the error rate of data #4 is shown as 0.78%. That is, the correction processing by corrector 13 reduces the rate of errors from 2.15% to 0.78% in the determination as to whether the voice data are associated with the same speaker or different speakers.

FIG. 7 illustrates a second result of evaluating the identification performance of identification device 10 according to this embodiment. The error rates shown in FIG. 7 have the same significance as those in FIG. 6.

Data #1 is voice data with a relatively low noise level, for example, with an SN ratio higher than or equal to 12 dB.

Data #2 is voice data with a relatively high noise level, for example, with an SN ratio lower than 12 dB.

Data #3 is voice data that is a mixture of data #1 and #2.

Data #4 is voice data that is a mixture of data #1 and #2. The score for voice data with a relatively high level of noise contained in the voice data described above is subjected to the correction processing by corrector 13.

In FIG. 7, the error rate of data #3 is shown as 5.81%. That is, without any correction processing by corrector 13, errors occur at 5.81% in the determination as to whether the voice data are associated with the same speaker or different speakers.

On the other hand, the error rate of data #4 is shown as 4.95%. That is, the correction processing by corrector 13 reduces the rate of the errors from 5.81% to 4.95% in the determination as to whether the voice data are associated with the same speaker or different speakers.

As described above, the identification device according to this embodiment performs the correction processing on the score and then outputs the corrected score, if the voice data has a feature that causes a degradation in the identification performance of the speaker identification processing. The correction processing is to reduce the influence of the degradation in the identification performance of the speaker identification processing on the score. The score for the voice data with the feature is corrected to be a score of less degraded identification performance. The corrected score indicates whether the voice data are associated with the same speaker or different speakers using a criterion in common with the score for voice data without the feature described above. The identification device thus determines whether the obtained voice data contains an utterance of a predetermined speaker more accurately. In this manner, the identification device identifies a speaker more accurately.

Through the correction processing, the identification device adjusts the distribution of the scores obtained by the identifier. Accordingly, the identification device makes the scores obtained for voice data on the same speaker with the feature that causes a degradation in the identification performance approximate to the scores obtained for voice data on the same speaker without the feature described above. Accordingly, the identification device identifies a speaker more easily and accurately.

The identification device performs the scaling processing on the score obtained by the identifier using the first, second, and third representative values obtained in advance. The identification device then makes the score obtained for voice data on the same speaker with the feature that causes a degradation in the identification performance approximate to the score obtained for voice data on the same speaker without the feature described above. Accordingly, the identification device identifies a speaker more easily and accurately.

The identification device obtains score S2 after the correction easily through the scaling processing, which is expressed by Equation (1), of score S1 obtained by the identifier. Accordingly, the identification device identifies a speaker more accurately, while performing the correction processing on the score more easily.

The identification device performs the correction processing on the score based on the determination on one of the following features as the feature that causes a degradation in the identification performance. The features include: a feature related to the length of a voice in the voice data obtained by the obtainer; a feature related to the level of noise contained in the voice; and a feature related to the reverberation period of the voice. Accordingly, the identification device identifies a speaker more easily and accurately.

The identification device performs the scaling processing using the mean, median, or mode of one or more scores as a representative value (i.e., first, second, or third representative value). Accordingly, the identification device identifies a speaker more accurately, while performing the correction processing on the score more easily.

In the embodiment described above, the constituent elements may consist of dedicated hardware or be achieved by executing software programs suitable for the constituent elements. The constituent elements may be achieved by a program executor, such as a CPU or a processor, reading out software programs stored in a recording medium, such as a hard disk or a semiconductor memory, and executes the read-out programs. Here, the software achieving the identification device, for example, according to the embodiment described above is the following program.

Specifically, this program causes a computer to execute an identification method including: obtaining voice data; obtaining, through speaker identification processing, a score indicating a degree of similarity between the voice data obtained and voice data on an utterance of a predetermined speaker; and performing correction processing on the score to reduce an influence of a degradation in identification performance of the speaker identification processing on the score and outputting the score corrected, when determining that the voice data obtained has a feature that causes a degradation in the identification performance.

While the identification device, for example, according to one or more aspects has been described above based on the embodiment, the present invention is not limited to the embodiment. The one or more aspects may include forms obtained by various modifications to the foregoing embodiment that can be conceived by those skilled in the art or forms achieved by freely combining the constituent elements and functions in the foregoing embodiment without departing from the scope of the present invention.

### [Industrial Applicability]

The present invention is applicable to an identification device that identifies the owner of voice (i.e., speaker) in voice data.

### [Reference Signs List]

- 10: identification device
- 11: obtainer
- 12: identifier
- 13: corrector
- 14: storage
- 16: voice data

## Claims

1. An identification device (10) comprising:
an obtainer (11) that obtains voice data;
an identifier (12) that obtains, through speaker identification processing, a score indicating a degree of similarity between the voice data obtained by the obtainer (11) and voice data on an utterance of a predetermined speaker; and
a corrector (13) that performs correction processing on the score to reduce an influence of a degradation in identification performance of the speaker identification processing by the identifier (12) on the score and outputs the score corrected, when the corrector (13) determines that the voice data obtained by the obtainer (11) has a feature that causes a degradation in the identification performance,
**characterized in that**
in the correction processing, the corrector (13) performs scaling processing of one or more scores, each being the score obtained by the identifier, using a first representative value, a second representative value, and a third representative value to convert a range of the scores obtained by the identifier (12) from the third representative value to the second representative value and from the third representative value to the first representative value,
the first representative value of the scores obtained by the identifier (12) in advance for two or more first voice data on a same speaker without the feature,
the second representative value of the scores obtained by the identifier (12) in advance for two or more second voice data on a same speaker with the feature,
the third representative value of the scores obtained by the identifier (12) for two or more third voice data on different speakers obtained in advance, and
wherein in the scaling processing, the corrector calculates S2 that is the score after being corrected by the corrector (13), based on following Equation (A): $S 2 = \left(S1-V3\right) \times \left(V1-V3\right) / \left(V2-V3\right) + V 3$
where S1 is the score obtained by the identifier, V1 is the first representative value, V2 is the second representative value, and V3 is the third representative value.

2. The identification device (10) according to claim 1, wherein
in the correction processing, the corrector (13) processes the score obtained by the identifier (12) to make a distribution of scores, each being the score obtained by the identifier (12) for two voice data on a same speaker with the feature, approximate to a distribution of scores, each being the score obtained by the identifier for two voice data without the feature indicating a same speaker.

3. The identification device (10) according to claims 1 to 2, wherein
the feature that causes a degradation in the identification performance of the speaker identification processing includes:
a feature that a length of a voice in the voice data obtained by the obtainer is shorter than a threshold;
a feature that a level of noise contained in the voice in the voice data obtained by the obtainer is higher than or equal to a threshold; or
a feature that a reverberation period of the voice in the voice data obtained by the obtainer is longer than or equal to a threshold.

4. The identification device (10) according to claim 1, wherein
the first representative value is a mean, a median, or a mode of the one or more scores obtained by the identifier (12) for the two or more first voice data,
the second representative value is a mean, a median, or a mode of the one or more scores obtained by the identifier (12) for the two or more second voice data, and
the third representative value is a mean, a median, or a mode of the one or more scores obtained by the identifier (12) of the two or more third voice data.

5. An identification method comprising:
obtaining voice data;
obtaining, through speaker identification processing, a score indicating a degree of similarity between the voice data obtained and voice data on an utterance of a predetermined speaker; and
performing correction processing on the score to reduce an influence of a degradation in identification performance of the speaker identification processing on the score and outputting the score corrected, when determining that the voice data obtained has a feature that causes a degradation in the identification performance,
**characterized in that**
in the correction processing, performing scaling processing of one or more scores, each being the score obtained, using a first representative value, a second representative value, and a third representative value to convert a range of the scores obtained from the third representative value to the second representative value and from the third representative value to the first representative value,
the first representative value of the scores obtained in advance for two or more first voice data on a same speaker without the feature,
the second representative value of the scores obtained in advance for two or more second voice data on a same speaker with the feature,
the third representative value of the scores obtained for two or more third voice data on different speakers obtained in advance, and
wherein in the scaling processing, calculating S2 that is the score after being corrected, based on following Equation (A): $S 2 = \left(S1-V3\right) \times \left(V1-V3\right) / \left(V2-V3\right) + V 3$
where S1 is the score obtained, V1 is the first representative value, V2 is the second representative value, and V3 is the third representative value.

6. A computer program for causing a computer to execute the identification method according to claim 5.

## Patentansprüche

1. Identifizierungsvorrichtung (10), umfassend:
einen Beschaffer (11), der Sprachdaten beschafft;
einen Identifizierer (12), der durch eine Sprecheridentifizierungsverarbeitung einen Wert erhält, der einen Ähnlichkeitsgrad zwischen den durch den Beschaffer (11) beschafften Sprachdaten und Sprachdaten zu einer Äußerung eines vorbestimmten Sprechers angibt; und
einen Korrektor (13), der eine Korrekturverarbeitung an dem Wert durchführt, um einen Einfluss einer Verschlechterung der Identifizierungsleistung der Sprecheridentifizierungsverarbeitung durch den Identifizierer (12) auf den Wert zu reduzieren, und den korrigierten Wert ausgibt, wenn der Korrektor (13) bestimmt, dass die durch den Beschaffer (11) beschafften Sprachdaten ein Merkmal aufweisen, das eine Verschlechterung der Identifizierungsleistung verursacht,
**dadurch gekennzeichnet, dass**
der Korrektor (13) in der Korrekturverarbeitung eine Skalierungsverarbeitung eines oder mehrerer Werte, von denen jeder der durch den Identifizierer erhaltene Wert ist, unter Verwendung eines ersten repräsentativen Wertes, eines zweiten repräsentativen Wertes und eines dritten repräsentativen Wertes durchführt, um einen Bereich der durch den Identifizierer (12) erhaltenen Werte vom dritten repräsentativen Wert zum zweiten repräsentativen Wert und vom dritten repräsentativen Wert zum ersten repräsentativen Wert umzuwandeln,
wobei der erste repräsentative Wert der durch den Identifizierer (12) im Voraus für zwei oder mehr erste Sprachdaten zu einem selben Sprecher ohne das Merkmal erhaltenen Werte ist,
der zweite repräsentative Wert der durch den Identifizierer (12) im Voraus für zwei oder mehr zweite Sprachdaten zu einem selben Sprecher mit dem Merkmal erhaltenen Werte ist,
der dritte repräsentative Wert der durch den Identifizierer (12) für zwei oder mehr dritte Sprachdaten zu verschiedenen Sprechern im Voraus erhaltenen Werte ist, und
wobei der Korrektor in der Skalierungsverarbeitung S2 berechnet, das der Wert nach der Korrektur durch den Korrektor (13) ist, basierend auf der folgenden Gleichung (A): $S 2 = \left(S1-V3\right) \times \left(V1-V3\right) / \left(V2-V3\right) + V 3$
wobei S1 der durch den Identifizierer erhaltene Wert ist, V1 der erste repräsentative Wert ist, V2 der zweite repräsentative Wert ist und V3 der dritte repräsentative Wert ist.

2. Identifizierungsvorrichtung (10) nach Anspruch 1, wobei
der Korrektor (13) in der Korrekturverarbeitung den durch den Identifizierer (12) erhaltenen Wert verarbeitet, um eine Verteilung von Werten, von denen jeder der durch den Identifizierer (12) für zwei Sprachdaten zu einem selben Sprecher mit dem Merkmal erhaltene Wert ist, einer Verteilung von Werten, von denen jeder der durch den Identifizierer für zwei Sprachdaten ohne das Merkmal, die einen selben Sprecher angeben, erhaltene Wert ist, anzunähern.

3. Identifizierungsvorrichtung (10) nach den Ansprüchen 1 bis 2, wobei
das Merkmal, das eine Verschlechterung der Identifizierungsleistung der Sprecheridentifizierungsverarbeitung verursacht, umfasst:
ein Merkmal, dass eine Länge einer Stimme in den durch den Beschaffer beschafften Sprachdaten kürzer als ein Schwellenwert ist;
ein Merkmal, dass ein Rauschpegel, der in der Stimme in den durch den Beschaffer beschafften Sprachdaten enthalten ist, höher als oder gleich einem Schwellenwert ist; oder
ein Merkmal, dass eine Nachhallzeit der Stimme in den durch den Beschaffer beschafften Sprachdaten länger als oder gleich einem Schwellenwert ist.

4. Identifizierungsvorrichtung (10) nach Anspruch 1, wobei
der erste repräsentative Wert ein Mittelwert, ein Median oder ein Modus des einen oder der mehreren durch den Identifizierer (12) für die zwei oder mehr ersten Sprachdaten erhaltenen Werte ist,
der zweite repräsentative Wert ein Mittelwert, ein Median oder ein Modus des einen oder der mehreren durch den Identifizierer (12) für die zwei oder mehr zweiten Sprachdaten erhaltenen Werte ist, und
der dritte repräsentative Wert ein Mittelwert, ein Median oder ein Modus des einen oder der mehreren durch den Identifizierer (12) der zwei oder mehr dritten Sprachdaten erhaltenen Werte ist.

5. Identifizierungsverfahren, umfassend:
Beschaffen von Sprachdaten;
Erhalten, durch eine Sprecheridentifizierungsverarbeitung, eines Wertes, der einen Ähnlichkeitsgrad zwischen den beschafften Sprachdaten und Sprachdaten zu einer Äußerung eines vorbestimmten Sprechers angibt; und
Durchführen einer Korrekturverarbeitung an dem Wert, um einen Einfluss einer Verschlechterung der Identifizierungsleistung der Sprecheridentifizierungsverarbeitung auf den Wert zu reduzieren, und Ausgeben des korrigierten Wertes, wenn bestimmt wird, dass die beschafften Sprachdaten ein Merkmal aufweisen, das eine Verschlechterung der Identifizierungsleistung verursacht,
**dadurch gekennzeichnet, dass**
in der Korrekturverarbeitung eine Skalierungsverarbeitung eines oder mehrerer Werte, von denen jeder der erhaltene Wert ist, unter Verwendung eines ersten repräsentativen Wertes, eines zweiten repräsentativen Wertes und eines dritten repräsentativen Wertes durchgeführt wird, um einen Bereich der erhaltenen Werte vom dritten repräsentativen Wert zum zweiten repräsentativen Wert und vom dritten repräsentativen Wert zum ersten repräsentativen Wert umzuwandeln,
wobei der erste repräsentative Wert der im Voraus für zwei oder mehr erste Sprachdaten zu einem selben Sprecher ohne das Merkmal erhaltenen Werte ist,
der zweite repräsentative Wert der im Voraus für zwei oder mehr zweite Sprachdaten zu einem selben Sprecher mit dem Merkmal erhaltenen Werte ist,
der dritte repräsentative Wert der für zwei oder mehr dritte Sprachdaten zu verschiedenen Sprechern im Voraus erhaltenen Werte ist, und
wobei in der Skalierungsverarbeitung S2 berechnet wird, das der Wert nach der Korrektur ist, basierend auf der folgenden Gleichung (A): $S 2 = \left(S1-V3\right) \times \left(V1-V3\right) / \left(V2-V3\right) + V 3$
wobei S1 der erhaltene Wert ist, V1 der erste repräsentative Wert ist, V2 der zweite repräsentative Wert ist und V3 der dritte repräsentative Wert ist.

6. Computerprogramm, das einen Computer veranlasst, das Identifizierungsverfahren nach Anspruch 5 auszuführen.

## Revendications

1. Un dispositif d'identification (10) comprenant :
un obtenteur (11) qui obtient des données vocales ;
un identificateur (12) qui obtient, par un traitement d'identification de locuteur, un score indiquant un degré de similarité entre les données vocales obtenues par l'obtenteur (11) et des données vocales relatives à une énonciation d'un locuteur prédéterminé ; et
un correcteur (13) qui effectue un traitement de correction sur le score pour réduire une influence d'une dégradation des performances d'identification du traitement d'identification de locuteur par l'identificateur (12) sur le score et délivre en sortie le score corrigé, lorsque le correcteur (13) détermine que les données vocales obtenues par l'obtenteur (11) présentent une caractéristique qui provoque une dégradation des performances d'identification,
**caractérisé en ce que**
dans le traitement de correction, le correcteur (13) effectue un traitement de mise à l'échelle d'un ou plusieurs scores, chacun étant le score obtenu par l'identificateur, en utilisant une première valeur représentative, une deuxième valeur représentative et une troisième valeur représentative pour convertir une plage des scores obtenus par l'identificateur (12) de la troisième valeur représentative à la deuxième valeur représentative et de la troisième valeur représentative à la première valeur représentative,
la première valeur représentative des scores obtenus par l'identificateur (12) à l'avance pour deux ou plusieurs premières données vocales relatives à un même locuteur sans la caractéristique,
la deuxième valeur représentative des scores obtenus par l'identificateur (12) à l'avance pour deux ou plusieurs deuxièmes données vocales relatives à un même locuteur avec la caractéristique,
la troisième valeur représentative des scores obtenus par l'identificateur (12) pour deux ou plusieurs troisièmes données vocales relatives à des locuteurs différents obtenus à l'avance, et
dans lequel dans le traitement de mise à l'échelle, le correcteur calcule S2 qui est le score après avoir été corrigé par le correcteur (13), sur la base de l'équation (A) suivante : $S 2 = \left(S1-V3\right) \times \left(V1-V3\right) / \left(V2-V3\right) + V 3$
où S1 est le score obtenu par l'identificateur, V1 est la première valeur représentative, V2 est la deuxième valeur représentative et V3 est la troisième valeur représentative.

2. Le dispositif d'identification (10) selon la revendication 1, dans lequel
dans le traitement de correction, le correcteur (13) traite le score obtenu par l'identificateur (12) pour rendre une distribution de scores, chacun étant le score obtenu par l'identificateur (12) pour deux données vocales relatives à un même locuteur avec la caractéristique, approximative d'une distribution de scores, chacun étant le score obtenu par l'identificateur pour deux données vocales sans la caractéristique indiquant un même locuteur.

3. Le dispositif d'identification (10) selon les revendications 1 à 2, dans lequel
la caractéristique qui provoque une dégradation des performances d'identification du traitement d'identification de locuteur comprend :
une caractéristique selon laquelle une longueur d'une voix dans les données vocales obtenues par l'obtenteur est inférieure à un seuil ;
une caractéristique selon laquelle un niveau de bruit contenu dans la voix dans les données vocales obtenues par l'obtenteur est supérieur ou égal à un seuil ; ou
une caractéristique selon laquelle une période de réverbération de la voix dans les données vocales obtenues par l'obtenteur est supérieure ou égale à un seuil.

4. Le dispositif d'identification (10) selon la revendication 1, dans lequel
la première valeur représentative est une moyenne, une médiane ou un mode du ou des scores obtenus par l'identificateur (12) pour les deux ou plusieurs premières données vocales,
la deuxième valeur représentative est une moyenne, une médiane ou un mode du ou des scores obtenus par l'identificateur (12) pour les deux ou plusieurs deuxièmes données vocales, et
la troisième valeur représentative est une moyenne, une médiane ou un mode du ou des scores obtenus par l'identificateur (12) des deux ou plusieurs troisièmes données vocales.

5. Un procédé d'identification comprenant :
obtenir des données vocales ;
obtenir, par un traitement d'identification de locuteur, un score indiquant un degré de similarité entre les données vocales obtenues et des données vocales relatives à une énonciation d'un locuteur prédéterminé ; et
effectuer un traitement de correction sur le score pour réduire une influence d'une dégradation des performances d'identification du traitement d'identification de locuteur sur le score et délivrer en sortie le score corrigé, lorsqu'il est déterminé que les données vocales obtenues présentent une caractéristique qui provoque une dégradation des performances d'identification,
**caractérisé en ce que**
dans le traitement de correction, effectuer un traitement de mise à l'échelle d'un ou plusieurs scores, chacun étant le score obtenu, en utilisant une première valeur représentative, une deuxième valeur représentative et une troisième valeur représentative pour convertir une plage des scores obtenus de la troisième valeur représentative à la deuxième valeur représentative et de la troisième valeur représentative à la première valeur représentative,
la première valeur représentative des scores obtenus à l'avance pour deux ou plusieurs premières données vocales relatives à un même locuteur sans la caractéristique,
la deuxième valeur représentative des scores obtenus à l'avance pour deux ou plusieurs deuxièmes données vocales relatives à un même locuteur avec la caractéristique,
la troisième valeur représentative des scores obtenus pour deux ou plusieurs troisièmes données vocales relatives à des locuteurs différents obtenus à l'avance, et
dans lequel dans le traitement de mise à l'échelle, calculer S2 qui est le score après avoir été corrigé, sur la base de l'équation (A) suivante : $S 2 = \left(S1-V3\right) \times \left(V1-V3\right) / \left(V2-V3\right) + V 3$
où S1 est le score obtenu, V1 est la première valeur représentative, V2 est la deuxième valeur représentative et V3 est la troisième valeur représentative.

6. Un programme d'ordinateur pour amener un ordinateur à exécuter le procédé d'identification selon la revendication 5.
